# EUROPÄISCHE PATENTSCHRIFT

(11) **EP 1 342 154 B1**
(45) Veröffentlichungstag und Bekanntmachung des Hinweises auf die Patenterteilung: **14.04.2004**
(21) Anmeldenummer: 01989477.3
(22) Anmeldetag: 16.11.2001
(51) Int. Cl.: G06F 7/72

(54) **KRYPTOGRAPHIEPROZESSOR**
CRYPTOGRAPHIC PROCESSOR
PROCESSEUR CRYPTOGRAPHIQUE

(30) Priorität: 13.12.2000 DE 10061998
(43) Veröffentlichungstag der Anmeldung: 10.09.2003
(73) Patentinhaber: Infineon Technologies AG, 81669 München (DE)
(72) Erfinder: ELBE, Astrid, 81243 München (DE); JANSSEN, Norbert, 81667 München (DE); SEDLAK, Holger, 82054 Sauerlach (DE)
(74) Vertreter: Zinkler, Franz, Dipl.-Ing.
(86) Internationale Anmeldenummer: PCT/EP2001/013279
(87) Internationale Veröffentlichungsnummer: WO 2002/048857

(56) Entgegenhaltungen:
- EP-A- 0 947 914
- EP-A- 1 022 683
- US-A- 6 141 422
- GUTTAG K M: "MULTIMEDIA POWERHOUSE TI'S NEW MVP CHIP BRINGS PARALLEL-PROCESSING POWER TO MULTIMEDIA APPLICATIONS" BYTE, MCGRAW-HILL INC. ST PETERBOROUGH, US, Bd. 19, Nr. 6, 1. Juni 1994 (1994-06-01), Seiten 57-58,60,62,64, XP000454241 ISSN: 0360-5280
- KATO T ET AL: "A DESIGN FOR MODULAR EXPONENTIATION COPROCESSOR IN MOBILE TELECOMMUNICATION TERMINALS" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, Bd. 1965, 17. August 2000 (2000-08-17), Seiten 216-228, XP001049135 ISBN: 3-540-41455-X

## Beschreibung

Die vorliegende Erfindung bezieht sich auf Kryptographietechniken und insbesondere auf die Architektur von für kryptographische Anwendungen verwendeten Kryptographieprozessoren.

Mit zunehmender Verbreitung von bargeldlosem Zahlungsverkehr, elektronischer Datenübertragung über öffentliche Netze, Austausch von Kreditkartennummern über öffentliche Netze und allgemein gesagt der Verwendung von sogenannten Smart Cards für Zahlungs-, Identifikations- oder Zugriffszwecke entsteht ein immer größerer Bedarf nach Kryptographietechniken. Kryptographietechniken umfassen einerseits Kryptographiealgorithmen und andererseits geeignete Prozessorenlösungen, welche die durch die Kryptographiealgorithmen vorgeschriebenen Berechnungen ausführen. Wurden früher Kryptographiealgorithmen mit Allzweckrechnern ausgeführt, so spielten die Kosten, der Rechenzeitbedarf und die Sicherheit gegenüber verschiedenartigsten Fremdattacken keine derart entscheidende Rolle wie heutzutage, wo kryptographische Algorithmen immer mehr auf Chipkarten oder speziellen Sicherheits-Ics ausgeführt werden, für die besondere Anforderungen gelten. So müssen solche Smart Cards einerseits preisgünstig verfügbar sein, da sie Massenprodukte sind, andererseits jedoch eine große Sicherheit gegenüber Fremdattacken aufweisen, da sie vollständig in der Gewalt des potentiellen Angreifers sind.

Darüber hinaus müssen kryptographische Prozessoren eine beachtliche Rechenleistung zur Verfügung stellen, zumal die Sicherheit von vielen kryptographischen Algorithmen, wie z. B. dem bekannten RSA-Algorithmus, entscheidend von der Länge der verwendeten Schlüssel abhängt. In anderen Worten ausgedrückt bedeutet dies, dass mit zunehmender Länge der zu verarbeitenden Zahlen auch die Sicherheit ansteigt, da ein Angriff, der auf dem Ausprobieren aller Möglichkeiten basiert, aus Rechenzeitgründen unmöglich gemacht wird.

In Zahlenwerten ausgedrückt bedeutet dies, dass Kryptographieprozessoren mit Integers, d. h. Ganzzahlen, umgehen müssen, welche eine Länge von vielleicht 1024 Bits, 2048 Bits oder vielleicht sogar noch mehr haben können. Zum Vergleich verarbeiten Prozessoren in einem üblichen PC 32-Bit- bzw. 64-Bit-Ganzzahlen. Lediglich bei der Berechnung unter Verwendung von elliptischen Kurven liegt die Stellenzahl bei niedrigeren Werten im Bereich von 160 Stellen, was jedoch immer noch deutlich über den üblichen PC-Stellenzahlen ist.

Ein hoher Rechenaufwand bedeutet jedoch auch eine hohe Rechenzeit, so dass für Kryptographieprozessoren gleichzeitig auch die wesentliche Anforderung darin besteht, einen hohen Rechendurchsatz zu erreichen, damit beispielsweise eine Identifikation, ein Zugang zu einem Gebäude, eine Bezahlungstransaktion oder eine Kreditkartenübermittlung nicht viele Minuten dauert, was für die Marktakzeptanz sehr schädlich wäre.

Zusammenfassend lässt sich daher feststellen, dass Kryptographieprozessoren sicher, schnell und daher außerordentlich leistungsstark sein müssen.

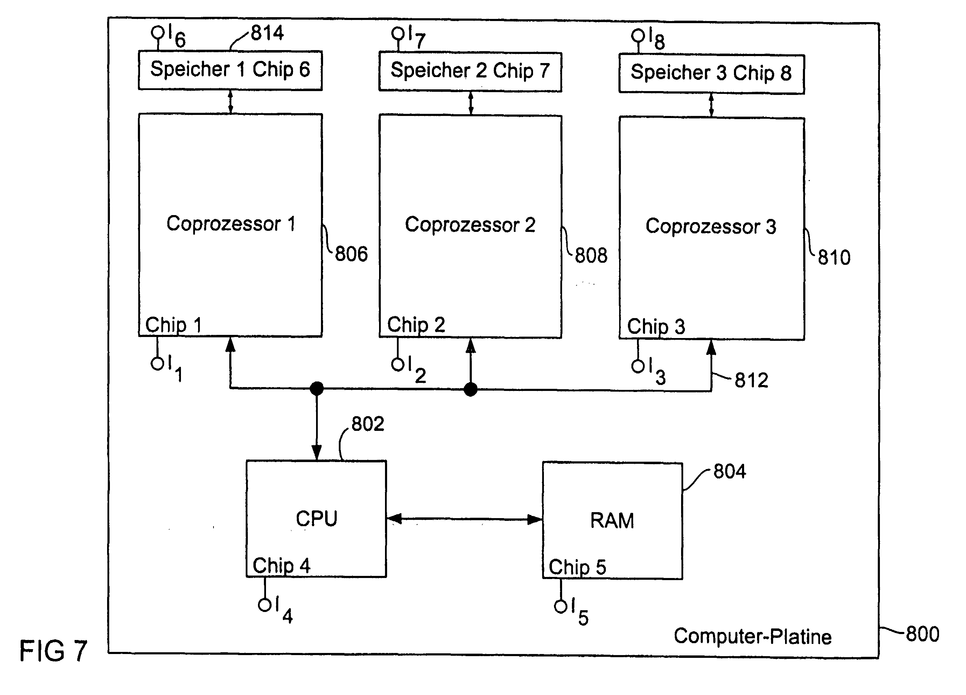

Eine Möglichkeit, um den Durchsatz durch einen Prozessor zu erhöhen, besteht darin, eine zentrale Verarbeitungseinheit mit einem oder mehreren Coprozessoren, welche parallel arbeiten, auszustatten, wie es beispielsweise bei modernen PCs oder aber auch bei modernen Graphikkarten der Fall ist. Ein solches Szenario ist in Fig. 7 gezeigt. Fig. 7 zeigt eine Computerplatine 800, auf der eine CPU 802, ein Arbeitsspeicher (RAM) 804, ein erster Coprozessor 806, ein zweiter Coprozessor 808 sowie ein dritter Coprozessor 810 angeordnet sind. Die CPU 802 ist mit den drei Coprozessoren 806, 808, 810 über einen Bus 812 verbunden. Ferner kann für jeden Coprozessor ein eigener Speicher vorgesehen sein, welcher nur für Operationen des Coprozessors dient, d. h. ein Speicher 1 814, ein Speicher 2 816 für den Coprozessor 2 sowie ein Speicher 3 818 für den Coprozessor 3.

Ferner wird jeder Chip, der auf der in Fig. 7 gezeigten Computerplatine 800 angeordnet ist, über einen eigenen Strom- bzw. Spannungsversorgungsanschluss I₁ bis I₈ mit der für das Funktionieren der elektronischen Komponenten innerhalb der einzelnen Elemente benötigten elektrischen Leistung versorgt. Für die Platine kann alternativ auch nur eine Stromversorgung vorhanden sein, die dann über die Platine zu den einzelnen Chips auf der Platine verteilt wird. Dabei stehen jedoch die Versorgungsleitungen zu den einzelnen Chips für einen Angreifer zur Verfügung.

Das in Fig. 7 gezeigte Konzept für übliche Computeranwendungen ist aus mehreren Gründen für Kryptographieprozessoren ungeeignet. Zum einen sind alle Elemente für die Kurzzahl-Arithmetik aufgeführt, während Kryptographieprozessoren Langzahlarithmetik-Operationen durchführen müssen.

Des weiteren weist jeder Chip auf der Computerplatine 800 einen eigenen Strom- bzw. Leistungszugang auf, auf den ohne weiteres von einem Angreifer zugegriffen werden kann, um Leistungsprofile oder Stromprofile über der Zeit abzugreifen. Das Abgreifen von Leistungsprofilen über der Zeit ist die Basis für eine Vielzahl von effizienten Attacken gegenüber Kryptographieprozessoren. Weitere Hintergründe bzw. eine detaillierte Darstellung verschiedener Attacken gegen Kryptographieprozessoren sind in "Information Leakage Attacks Against Smart Card Implementations of Cryptographic Algorithms and Countermeasures", Hess u. a., Eurosmart Security Conference, 13. Juni bis 15. Juni 2000, dargestellt. Als Gegenmaßnahmen werden Implementationen vorgeschlagen, welche darauf aufbauen, dass verschiedene Operationen immer die gleiche Zeit benötigen, so dass ein Angreifer aufgrund eines Leistungsprofils nicht ersehen kann, ob der Kryptographieprozessor eine Multiplikation, eine Addition oder irgend etwas anderes ausgeführt hat.

In "Design of Long Integer Arithmetic units for Public-Key Algorithms", Hess u. a. Eurosmart Security Conference, 13. Juni bis 15. Juni 2000 wird auf verschiedene Rechenoperationen eingegangen, welche von Kryptographie-Prozessoren ausführbar sein müssen. Insbesondere wird auf die modulare Multiplikation, Verfahren zur modularen Reduktion sowie auf das sogenannten ZDN-Verfahren eingegangen, das in dem deutschen Patent DE 36 31 992 C2 dargestellt ist.

Das ZDN-Verfahren basiert auf einer Seriell/Parallel-Architektur unter Verwendung von parallel ausführbaren Look-Ahead Algorithmen für die Multiplikation und die modulare Reduktion, um eine Multiplikation zweier Binärzahlen in eine iterative 3-Operanden-Addition unter Verwendung von Look-Ahead-Parametern für die Multiplikation und die modulare Reduktion zu transformieren. Hierzu wird die modulare Multiplikation in eine serielle Berechnung von Partialprodukten zerlegt. Zu Beginn der Iteration werden zwei Partialprodukte gebildet und dann unter Berücksichtigung der modularen Reduktion zusammenaddiert, um ein Zwischenergebnis zu erhalten. Hierauf wird ein weiteres Partialprodukt gebildet und wieder unter Berücksichtigung der modularen Reduktion zu dem Zwischenergebnis hinzuaddiert. Diese Iteration wird fortgesetzt, bis sämtliche Stellen des Multiplikators abgearbeitet sind. Für die Drei-Operanden-Addition umfasst ein Kryptocoprozessor ein Addierwerk, welches in einem aktuellen Iterationsschritt die Summation eines neuen Partialprodukts zu dem Zwischenergebnis des vorausgehenden Iterationsschritts durchführt.

So könnte jeder Coprozessor von Fig. 7 mit einer eigenen ZDN-Einheit ausgestattet sein, um mehrere modulare Multiplikationen parallel auszuführen, um für bestimmte Anwendungen den Durchsatz zu erhöhen. Diese Lösung würde jedoch wiederum daran scheitern, dass ein Angreifer von jedem Chip einzeln die Stromprofile eruieren könnte, so dass zwar eine Erhöhung des Durchsatzes erreicht worden ist, jedoch auf Kosten der Sicherheit des Kryptographie-Rechners.

Die Aufgabe der vorliegenden Erfindung besteht darin, einen schnellen und sicheren Kryptographieprozessor zu schaffen.

Diese Aufgabe wird durch einen Kryptographieprozessor nach Patentanspruch 1 gelöst.

Der vorliegenden Erfindung liegt die Erkenntnis zugrunde, dass von der herkömmlichen Art und Weise zum Parallelisieren von kryptographischen Operationen weggegangen werden muss. Kryptographieprozessoren gemäß der vorliegenden Erfindung sind auf einem einzigen Chip implementiert. Eine Mehrzahl von Coprozessoren sind über einen Bus mit einer zentralen Verarbeitungseinheit verbunden, wobei sämtliche Coprozessoren durch einen gemeinsamen Stromversorgungsanschluss mit Leistung versorgt werden. Dann ist es einem Angreifer nur noch sehr schwer oder sogar nicht mehr möglich, die Operationen der einzelnen Coprozessoren anhand eines Leistungsprofils an dem Stromversorgungsanschluss "abzuhören". Zur Erhöhung des Durchsatzes des Kryptographieprozessors sind die Coprozessoren über den Bus parallel mit der zentralen Verarbeitungseinheit verbunden, derart, dass eine arithmetische Operation durch die zentrale Verarbeitungseinheit (CPU) auf die einzelnen Coprozessoren verteilt werden kann.

Vorzugsweise sind mehrere verschiedene Typen von Coprozessoren auf dem einen Chip integriert, so dass der Kryptographieprozessor als multifunktionaler Kryptographieprozessor eingesetzt werden kann. Mit anderen Worten bedeutet dies, dass ein Coprozessor bzw. eine Gruppe von Coprozessoren für asymmetrische Verschlüsselungsverfahren, wie z. B. den RSA-Algorithmus, ausgestaltet sind. Wieder andere Kryptocöprozessoren sind zur Durchführung von arithmetischen Operationen vorgesehen, welche z. B. für DES-Verschlüsselungsverfahren nötig sind. Ein weiterer Coprozessor bzw. mehrere weitere Coprozessoren bilden z. B. ein AES-Modul, um symmetrische Verschlüsselungsverfahren durchführen zu können, während wieder andere Coprozessoren z. B. ein Hash-Modul bilden, um Hash-Werte zu berechnen. Damit wird ein sicherer multifunktionaler Kryptographieprozessor erhalten, welcher, wenn er eine entsprechende Anzahl von Kryptocoprozessoren umfasst, für viele verschiedene Verschlüsselungsverfahren eingesetzt werden kann. Ein solcher multifunktionaler Kryptographieprozessor ist insbesondere für Server-Anwendungen z. B. im Internet vorteilhaft, derart, dass mit einem Server viele verschiedene Verschlüsselungsaufgaben ausgeführt werden können.

Multifunktionalität ist jedoch auch für Smart Cards von Vorteil, zumal verschiedene Verschlüsselungskonzepte parallel vorhanden sind bzw. sich immer weiter ausbreiten. So wird eine Smart Card am Markt erfolgreich sein, wenn sie viele verschiedenen Funktionalitäten ausführen kann, und zwar im Vergleich zu einem Konzept mit vielen verschiedenen Smart Cards für viele verschiedenen Operationen, da ein Smart Card Inhaber in seiner Brieftasche lediglich eine einzige Smart Card halten muss und nicht beispielsweise 10 verschiedene Smart Cards für 10 verschiedene Anwendungen.

Des weiteren liefert der erfindungsgemäße Kryptographieprozessor nicht nur Multifunktionalität, sondern darüber hinaus eine höhere Sicherheit. Die höhere Sicherheit ist gewissermaßen ein "Abfallprodukt" der Multifunktionalität, da die verschiedenen kryptographischen Algorithmen verschiedene Operationen und damit verschiedene Leistungsprofile haben. Selbst wenn immer nur ein Kryptocoprozessor einen Algorithmustyp ausführt und die anderen Kryptocoprozessoren gerade ruhen, da sie nicht angesprochen worden sind, existiert für einen Angreifer eine weitere Barriere dahingehend, dass er, bevor er das individuelle Leistungsprofil analysieren kann, zunächst herausfinden muss, welcher Algorithmustyp gerade aktiv ist. Wesentlich schwieriger wird es für den Angreifern, wenn zwei Kryptocoprozessortypen parallel arbeiten, da sich dann Leistungsprofile von zwei völlig verschiedenen Algorithmus-Typen an dem gemeinsamen Stromversorgungsanschluss überlagern.

Dieses Szenario kann prinzipiell immer erreicht werden, wenn der Kryptocoprozessor derart ausgestaltet ist, dass ein Typ von Kryptocoprozessoren gewissermaßen eine "Dummy"-Berechnung ausführt, selbst wenn lediglich ein einziger anderer Kryptocoprozessortyp angesprochen ist. Wenn der "Dummy"-Kryptocoprozessor zufällig ausgewählt wird, so wird es einem Angreifer noch schwerer gemacht, Parameter des "Nutz"-Kryptocoprozessoralgorithmus zu eruieren, da er, selbst wenn immer der gleiche Nutz-Algorithmus ausgeführt, nicht weiß, welches andere Modul gerade arbeitet. Die Sicherheit steigt somit mit der Anzahl der verschiedenen Kryptocoprozessoren auf dem Kryptographieprozessorchip.

Bevorzugte Ausführungsbeispiele der vorliegenden Erfindung werden nachfolgend bezugnehmend auf die beiliegenden Zeichnungen detailliert erläutert. Es zeigen:
- Fig. 1: einen erfindungsgemäßen Kryptographieprozessor, der auf einem einzigen Chip integriert ist;
- Fig. 2: eine detailliertere Darstellung der Mehrzahl von autarken Coprozessoren, die von einer CPU angesteuert werden;
- Fig. 3: eine detailliertere Darstellung einer Arithmetikeinheit, welche für eine Drei-Operanden-Addition geeignet ist;
- Fig. 4a: ein schematisches Flussdiagramm zum Durchführen einer modularen Multiplikation auf seriell/parallele Art und Weise;
- Fig. 4b: ein Zahlenbeispiel zur Veranschaulichung der seriell/parallelen Arbeitsweise einer Arithmetikeinheit am Beispiel einer Multiplikation;
- Fig. 5: ein Beispiel zum Aufteilen einer modularen Exponentiation in eine Anzahl von modularen Multiplikationen;
- Fig. 6: ein weiteres Beispiel zum Aufteilen einer modularen Multiplikation auf verschiedene Coprozessoren; und
- Fig. 7: eine Computerplatine mit einer Vielzahl von getrennt versorgten Bauelementen.

Bevor detaillierter auf die einzelnen Figuren eingegangen wird, wird im nachfolgenden ausgeführt, weshalb durch Parallelschaltung mehrerer Coprozessoren, die auf einem Chip angeordnet sind und durch eine Steuereinheit, die auf demselben Chip angeordnet ist, gesteuert werden, eine höhere Sicherheit erreicht wird.

Kryptographieprozessoren werden für sicherheitskritische Anwendung benutzt, beispielsweise für digitale Signaturen, Authentifikationen oder Verschlüsselungsaufgaben. Ein Angreifer möchte beispielsweise den geheimen Schlüssel herausfinden, um dadurch das Kryptographieverfahren zu brechen. Kryptographieprozessoren werden beispielsweise in Chipkarten eingesetzt, welche, wie es bereits ausgeführt worden ist, Smart Cards oder Signaturkarten für eine rechtsverbindliche elektronische Unterschrift oder auch für Homebanking oder zum Bezahlen mit dem Mobiltelephon usw. umfassen. Alternativ werden solche Kryptographieprozessoren auch in Computern und Servern als Sicherheits-IC eingesetzt, um eine Authentifikation durchzuführen, oder um Verschlüsselungsaufgaben wahrnehmen zu können, welche beispielsweise im sicheren Bezahlen über das Internet, in sogenannten SSL-Sessions (SSL = Secure Socket Layer), d. h. der sicheren Übermittlung von Kreditkartennummern, bestehen können.

Typische physikalische Angriffe messen den Stromverbrauch (SPA, DPA, Timing-Attacken) oder die elektromagnetische Abstrahlung. Bezüglich einer näheren Erläuterung der Angriffe sei auf die eingangs erwähnten Literaturstellen verwiesen.

Da die Angreifer bei der heutigen Halbleitertechnologie, welche Strukturen im Bereich von typischerweise kleiner oder gleich 250 Nanometern erreicht, nur sehr schwer lokale Strommessungen durchführen können, wird bei einem Angriff typischerweise der Stromverbrauch der gesamten Chipkarte einschließlich CPU und Coprozessor gemessen, welcher sich aus der Summe der einzelnen Stromverbräuche von beispielsweise der CPU, dem RAM, einem ROM, einem E²PROM, einem Flash-Memory, einer Zeitsteuereinheit, einem Zufallszahlengenerator (RNG), einem DES-Modul und dem Kryptocoprozessor zusammensetzt.

Da die Kryptocoprozessoren typischerweise den größten Stromverbrauch haben, kann ein Angreifer sehen, wann die einzelnen Kryptocoprozessoren zu rechnen beginnen, wenn die einzelnen Coprozessoren einzeln mit Leistung versorgt werden. Um dies zu vermeiden, wäre ein über der Zeit vollständig konstanter Stromverbrauch das Ziel, ein Angreifer würde dann nicht mehr erkennen, wann ein Kryptocoprozessor zu rechnen beginnt. Dieses ideale Ziel kann nicht erreicht werden, es wird jedoch durch das erfindungsgemäße Parallelschalten von Coprozessoren ein möglichst gleichförmiges "Rauschen" um einen Mittelwert angestrebt und erreicht.

Der Stromverbrauch eines beispielsweise in CMOS-Technologie gefertigten Chips ändert sich bei einer Umschaltung von einer "0" auf eine "1". Daher ist der Stromverbrauch datenabhängig sowie abhängig von den verwendeten Befehlen der CPU und der Kryptocoprozessoren.

Schaltet man nun mehrere Coprozessoren parallel und lässt sie mehrere Operationen bzw. Teiloperationen parallel abarbeiten, oder wird eine Operation auf mehrere Coprozessoren aufgeteilt, so überlagern sich, wie es ausgeführt worden ist, die Stromprofile, welche durch die Daten- und Befehlsverarbeitung entstehen.

Je mehr Coprozessoren parallel arbeiten, desto schwieriger kann auf Daten und Befehle in den einzelnen Coprozessoren bzw. in der Steuereinheit zurückgeschlossen werden, da die Daten und Befehle in jedem Coprozessor üblicherweise unterschiedlich sein werden, der Angreifer jedoch nur die Überlagerung unterschiedlicher Befehle und nicht die auf einzelne Befehle zurückgehenden Stromprofile sieht.

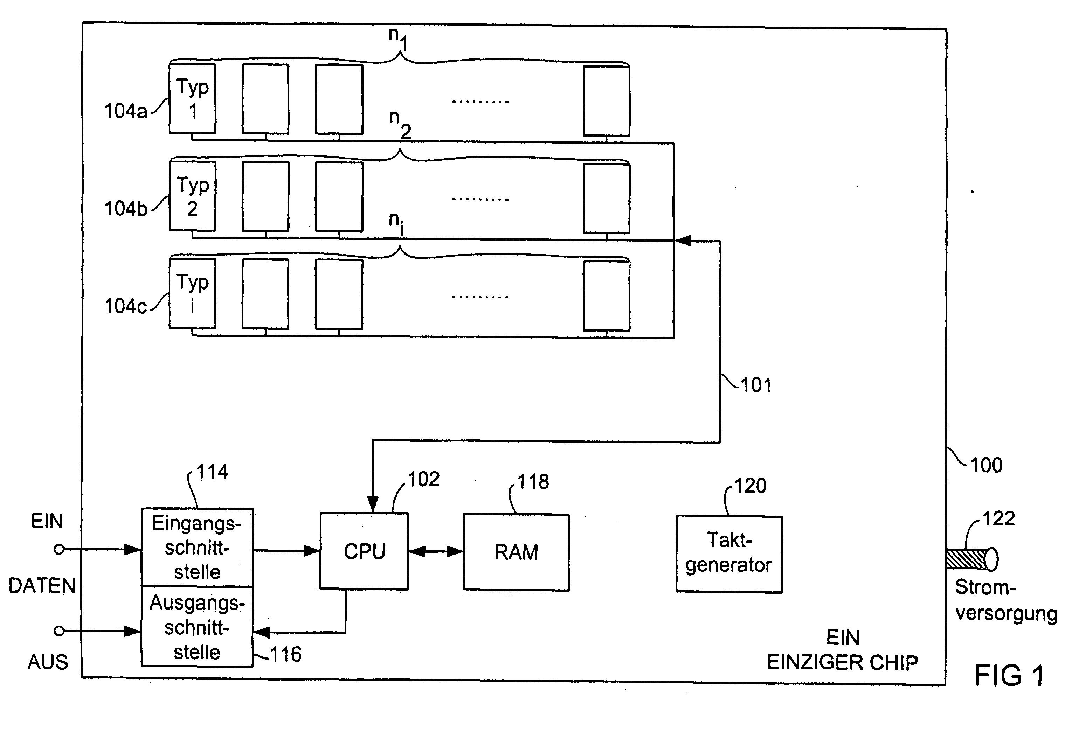

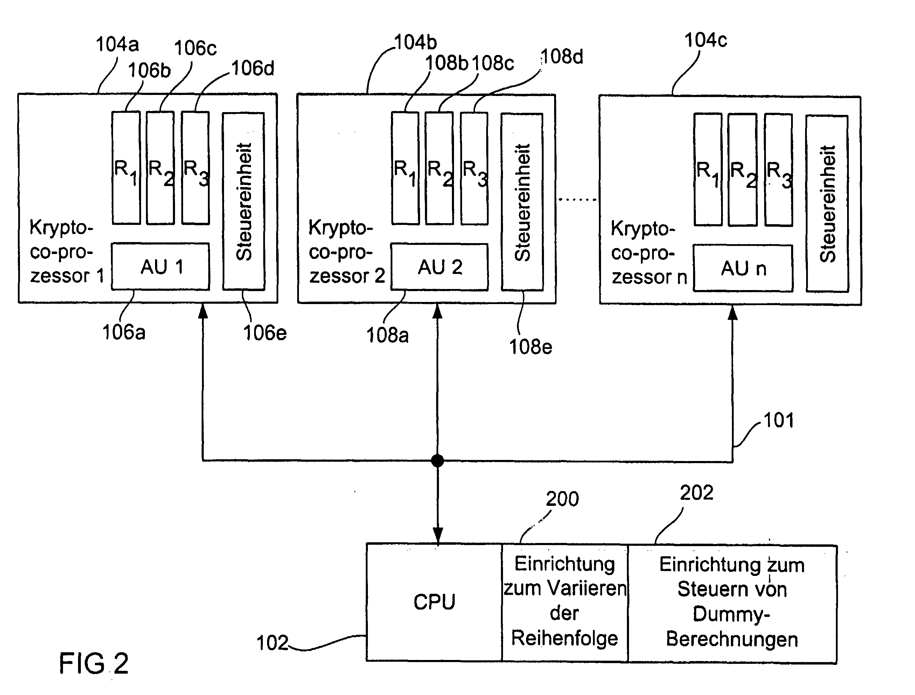

Fig. 1 zeigt einen erfindungsgemäßen Kryptographieprozessor zum Durchführen von Operationen für kryptographische Anwendungen. Der Kryptographieprozessor ist auf einem einzigen Chip 100 implementiert und umfasst eine zentrale Verarbeitungseinheit (CPU) 102 und eine Mehrzahl von Coprozessoren 104a, 104b, 104c. Die Coprozessoren sind, wie es in Fig. 1 gezeigt ist, auf demselben Chip angeordnet wie die zentrale Verarbeitungseinheit 102. Jeder Coprozessor der Mehrzahl von Coprozessoren umfasst eine eigene arithmetische Einheit. Vorzugsweise umfasst jeder Coprozessor 104a, 104b, 104c neben der AU auch zumindest ein Register (REG), um, wie es bezugnehmend auf Fig. 2 ausgeführt wird, Zwischenergebnisse speichern zu können.

Ein typischer Kryptographieprozessor wird eine Eingangsschnittstelle 114 und eine Ausgangsschnittstelle 116 umfassen, welche mit äußeren Anschlüssen für eine Dateneingabe bzw. eine Datenausgabe sowie mit der CPU 102 verbunden sind. Typischerweise ist der CPU 102 ein eigener Speicher 118 zugeordnet, der in Fig. 1 mit RAM bezeichnet ist. Unter anderem kann der Kryptographieprozessor noch einen Taktgenerator 120, weitere Speicher, Zufallszahlengeneratoren etc. umfassen, welche in Fig. 1 nicht gezeigt sind.

Es sei darauf hingewiesen, dass sämtliche in Fig. 1 dargestellten Elemente auf einem einzigen Chip implementiert sind, welcher durch einen einzigen Stromversorgungsanschluss 122 mit Leistung versorgt wird. Der Chip 100 umfasst intern Stromversorgungsleitungen zu sämtlichen in Fig. 1 gezeigten Elementen, welche jedoch aus oben angegebenen Gründen nicht einzeln abgehört werden können.

Dagegen stellt es ein Leichtes dar, den Stromversorgungsanschluss 122 abzuhören. Im Gegensatz zu der in Fig. 7 gezeigten Platine, bei der die Stromversorgungsanschlüsse aller einzelnen Komponenten sehr leicht abhörbar sind, und daher sehr "ausdrucksstarke" Stromprofile haben, ist das am Stromversorgungsanschluss 122 anliegende Stromprofil nahezu konstant bzw. weist ein möglichst homogenes Rauschen um einen konstanten Wert auf. Dies ist darauf zurückzuführen, dass die Coprozessoren 104a, 104b, 104c, welche am meisten zum Stromverbrauch beitragen, bei entsprechender Ansteuerung bzw. bei entsprechendem Aufbau unabhängig voneinander beispielsweise von "0" auf "1" umschalten und daher unkorreliert voneinander Strom verbrauchen.

Die Parallelschaltung der einzelnen Coprozessoren führt zudem dazu, dass der Durchsatz des Kryptographieprozessors erhöht werden kann, so dass im Falle der Ausführung eines Speichers auf dem Chip die damit einhergehenden Geschwindigkeitseinbußen, welche aufgrund unterschiedlicher Technologien für Speicher und Rechenwerke auftreten, mehr als ausgeglichen werden können.

Der Kryptographieprozessor von Fig. 1 umfasst, wie es bereits ausgeführt worden ist, eine CPU 102, welche über einen Bus 101 mit einer Mehrzahl von Kryptocoprozessoren 104a, 104b, 104c verbunden ist. Erfindungsgemäß wird eine Homogenisierung des Leistungsprofils an dem gemeinsamen Stromversorgungsanschluss 122 bereits durch zwei voneinander getrennte autarke Kryptocoprozessoren 104a und 104b erreicht. Die Sicherheit wird verbessert, wenn die beiden Kryptocoprozessoren 104a und 104b unterschiedlich ausgeführt sind, d. h. entweder unterschiedliche Teiloperationen einer arithmetischen Operation ausführen können bzw. Rechenwerke für verschiedene kryptographische Algorithmen haben, wie z. B. für asymmetrische Verschlüsselungsverfahren (z. B. RSA), symmetrische Verschlüsselungsverfahren (DES, 3DES oder AES), Hash-Module zur Berechnung von Hash-Werten und dergleichen. Der Durchsatz wird erhöht, wenn für jeden kryptographischen Algorithmustyp eine Mehrzahl von Kryptocoprozessoren parallel geschaltet wird. So zeigt Fig. 1 n₁ parallel geschaltete Kryptocoprozessoren, welche alle derart ausgestaltet sind, dass sie z. B. bei RSA-Algorithmen auftretende Operationen ausführen können. In der zweiten Coprozessorzeile von Fig. 1 sind n₂ komplette autarke Kryptocoprozessoren gezeigt, welche beispielsweise alle für arithmetische Operationen ausgestalteten, die für DES-Algorithmen erforderlich sind. Schließlich sind in der dritten Kryptocoprozessorzeile von Fig. 1 nᵢ autarke Kryptocoprozessoren dargestellt, welche alle für Operationen ausgestaltet sind, die beispielsweise bei Hash-Berechnungen erforderlich sind. Damit kann eine erhebliche Durchsatzsteigerung für die verschiedenen kryptographischen Algorithmen bzw. Operationen, welche für dieselben erforderlich sind, erreicht werden, wenn diese Operationen bzw. durch den kryptographischen Algorithmus vorgegebene Aufgaben auf parallele autarke Rechenwerke verteilt werden können.

Ein solcher multifunktionaler Kryptographieprozessor, welcher eine Mehrzahl von Kryptocoprozessoren für unterschiedliche Aufgaben umfasst, ist auch dann vorteilhaft verwendbar, wenn der in Fig. 1 gezeigte Kryptographieprozessor, welcher beispielsweise auf einer Smart Card implementiert ist, derart angesteuert wird, dass er nur einen kryptographischen Algorithmus bearbeiten muss. Vorteilhafterweise ist die CPU derart ausgestaltet, dass sie in diesem Fall einen eigentlich ruhenden Kryptocoprozessortyp ansteuert, damit derselbe "Dummy"-Berechnungen ausführt, derart, dass ein Angreifer am Stromversorgungseingang 122 zumindest zwei überlagerte Leistungsprofile sieht. Vorteilhafterweise wird der Kryptocoprozessortyp, welcher Dummy-Berechnungen ausführt, zufällig ausgewählt, so dass ein Angreifer, selbst wenn er herausgefunden hat, welcher Coprozessortyp die Nutzberechnungen ausführt, niemals weiß, welcher Kryptocoprozessortyp gerade Dummy-Berechnungen durchführt, wobei gewissermaßen ein "Dummy-Leistungsprofil" dem "Nutz-Leistungsprofil" am gemeinsamen Stromversorgungsanschluss überlagert ist.

Fig. 2 zeigt eine detailliertere Darstellung der Kryptocoprozessoren 104a, 104b und 104c. Wie es in Fig. 2 gezeigt ist, umfasst der autarke Kryptocoprozessor 104a eine arithmetische Einheit 106a, drei Register 106b bis 106d sowie eine eigene Steuereinheit 106e. Dasselbe gilt für den Kryptocoprozessor 104b, welcher ebenfalls eine arithmetische Einheit 108a, beispielsweise drei Register 108b bis 108d sowie eine eigene Steuereinheit 108e aufweist. Analog dazu ist der Kryptocoprozessor 104c aufgebaut.

In Fig. 2 ist ferner schematisch die Einrichtung zum Variieren der Reihenfolge 200 als Teil der CPU gezeigt. Dasselbe gilt für eine Einrichtung 202 zum Steuern von Dummy-Berechnungen, welche ebenfalls als Teil der CPU 102 dargestellt ist. Die Einrichtung 202 ist bei einem bevorzugten - Ausführungsbeispiel der vorliegenden Erfindung angeordnet, um zufällig den Kryptocoprozessor bzw. den Typ von Kryptocoprozessoren anzuwählen, der parallel zur Nutzberechnung eines anderen Kryptocoprozessortyps die Dummy-Berechnungen ausführen soll.

Bezüglich der verschiedenen Kryptographie-Algorithmen bzw. Hardware-Realisierungen derselben wird auf "Handbook of Applied Cryptography, Menezes, van Oorschot und Vanstone, CRC Press, 1997, verwiesen.

Gemäß einem bevorzugten Ausführungsbeispiel kann die Steuereinheit 105 die beiden Coprozessoren 106 und 108 beispielsweise auch derart ansteuern, dass die arithmetischen Einheiten AU₁ und AU₂ so miteinander verkoppelt werden, dass beide Coprozessoren, welche dann einen Cluster bilden, arithmetische Operationen mit Zahlen einer Länge L₁ + L₂ durchführen. Die Register der beiden Coprozessoren können somit zusammengeschaltet werden.

Alternativ kann einem Coprozessor jedoch auch eine Anzahl von Registern exklusiv zugewiesen werden, welche so groß ist, dass die Operanden für mehrere Teiloperationen, wie z. B. modulare Multiplikationen oder modulare Exponentiationen, ausreichen. Zur Vermeidung von Informationslecks können die Teiloperationen dann beispielsweise durch eine Einrichtung zum Variieren der Reihenfolge derselben, die in Fig. 2 mit 200 bezeichnet ist, überlagert oder sogar zufällig vermischt werden, um noch eine weitere Verschleierung des Stromprofils zu erreichen. Dies wird besonders dann vorteilhaft sein, wenn beispielsweise lediglich zwei Coprozessoren vorhanden sind bzw. lediglich zwei Coprozessoren arbeiten, während die anderen Coprozessoren eines Kryptographieprozessors gerade stillstehen.

Gemäß einem bevorzugten Ausführungsbeispiel der vorliegenden Erfindung umfasst die Steuereinheit 105 ferner eine in Fig. 2 nicht gezeigte Einrichtung zum Abschalten von Coprozessoren bzw. Registern von Coprozessoren, wenn dieselben nicht benötigt werden, was besonders für batteriebetriebene Anwendungen von Vorteil sein kann, um den Stromverbrauch der Gesamt-Schaltung zu sparen. CMOS-Bauelemente benötigen zwar nur signifikant Strom, wenn umgeschaltet wird, sie haben jedoch auch einen Ruhestromverbrauch, welcher dann ins Gewicht fallen kann, wenn die zur Verfügung stehende Leistung begrenzt ist.

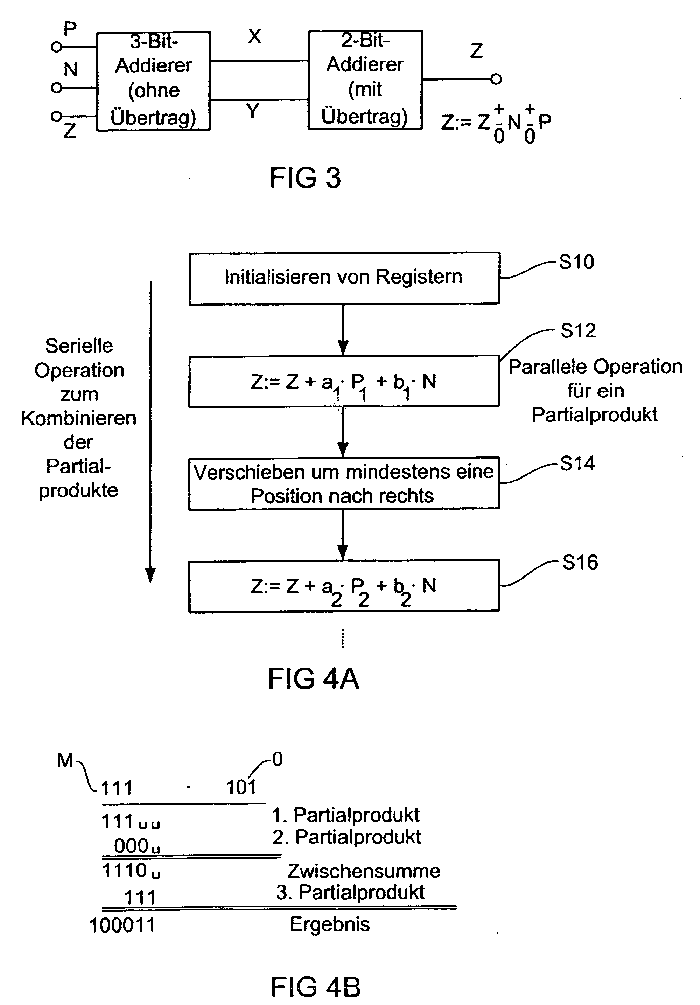

Wie es bereits ausgeführt worden ist, hat ein Kryptographieprozessor aufgrund der langen Zahlen, die er verarbeiten muss, die Eigenschaft, dass bestimmte Teiloperationen, wie z. B. eine Seriell/Parallel-Multiplikation, wie sie bezugnehmend auf die Fig. 4a und 4b dargestellt wird, ziemlich viel Zeit benötigt. Bevorzugterweise sind die Coprozessoren derart ausgeführt, dass sie eine solche Teiloperation selbständig ohne Eingriffe der Steuereinheit 105 durchführen können, nachdem die Steuereinheit den erforderlichen Befehl an das Rechenwerk abgegeben hat. Hierzu benötigt jeder Coprozessor selbstverständlich Register zum Speichern der Zwischenlösungen.

Aufgrund der Tatsache, dass ein Coprozessor ohne Input der CPU 102 relativ lange arbeitet, kann die CPU 102 eine Vielzahl von einzelnen Coprozessoren gewissermaßen seriell, also nacheinander, mit den nötigen Befehlen versehen, derart, dass sämtliche Coprozessoren parallel arbeiten, jedoch gewissermaßen zeitlich gestaffelt zueinander.

Zum Beispiel wird das erste Coprozessor zu einem bestimmten Zeitpunkt aktiviert. Ist die CPU 102 mit der Aktivierung des ersten Coprozessors fertig, so führt dieselbe unmittelbar die Aktivierung des zweiten Coprozessors durch, während der erste Coprozessor bereits arbeitet. Der dritte Coprozessor wird dann aktiviert, wenn die Aktivierung des zweiten Coprozessors vollendet ist. Dies bedeutet, dass während der Aktivierung des dritten Coprozessors der erste und der zweite Coprozessor bereits rechnen. Wenn dies für alle n Coprozessoren durchgeführt wird, so arbeiten alle Coprozessoren zeitlich versetzt. Wenn alle Coprozessoren derart arbeiten, dass ihre Teiloperationen gleich lang dauern, so wird der erste Coprozessor als erster fertig sein.

Nun kann die CPU die Ergebnisse vom ersten Coprozessor erhalten und ist damit idealerweise fertig, bevor der zweite Coprozessor fertig ist. Damit kann der Durchsatz wesentlich erhöht werden, wobei auch eine optimale Ausnutzung der Rechenkapazität der CPU 102 erreicht wird. Wenn sämtliche Coprozessoren identische Operationen ausführen, so entsteht dennoch ein stark verschleiertes Stromprofil, da sämtliche Coprozessoren zeitlich versetzt arbeiten. Anders wäre der Fall, wenn sämtliche Coprozessoren durch die CPU zum gleichen Zeitpunkt aktiviert werden und gewissermaßen vollständig synchron arbeiten. Dann würde ein nicht verschleiertes Stromprofil und sogar noch verstärktes Stromprofil resultieren. Daher ist das serielle Aktivieren der Coprozessoren auch im Hinblick auf die Sicherheit des Kryptographieprozessors vorteilhaft.

Im nachfolgenden wird auf Fig. 3 eingegangen, welche eine Vorrichtung zum Durchführen einer Drei-Operanden-Addition darstellt, wie sie rechts in Fig. 3 formelmäßig angegeben ist. In der Formel rechts in Fig. 3 ist dargestellt, dass Addition und Subtraktion gleichermaßen ausgeführt werden, da ein Operand einfach mit dem Faktor "-1" multipliziert werden muss, um zu einer Subtraktion zu kommen. Die Drei-Operanden-Addition wird mittels eines Drei-Bit-Addierers, welcher ohne Übertrag arbeitet, d. h. eines Halbaddierers, und eines nachgeschalteten Zwei-Bit-Addierers, durchgeführt, welcher mit Übertrag arbeitet, d. h. welcher ein Volladdierer ist. Alternativ kann auch der Fall auftreten, daß zum Operanden Z nur der Operand N, nur der Operand P oder gar kein Operand hinzuzuaddieren bzw. zu subtrahieren ist. Dies ist in Fig. 3 durch die "Null" unter dem Plus/Minus-Zeichen symbolisiert und wird durch die in Fig. 4a dargestellten sogenannten Look-Ahead-parameter aᵢ, bᵢ symbolisiert, die in jedem Iterationsschritt erneut berechnet werden.

Fig. 3 zeigt einen sogenannten Bit-Slice eines solchen Addierwerks. Für die Addition von drei Zahlen mit beispielsweise 1024 Binärstellen würde die in Fig. 3 gezeigte Anordnung für einen vollständig parallelen Betrieb 1024 mal in der arithmetischen Einheit eines Rechenwerks 106 vorhanden sein.

Bei einem bevorzugten Ausführungsbeispiel der vorliegenden Erfindung ist jeder Coprozessor 106 bis 112 (Fig. 1) angeordnet, um eine modulare Multiplikation unter Verwendung des Look-Ahead-Algorithmus auszuführen, der in der DE 36 31 992 C2 dargelegt ist.

Eine hierfür erforderliche modulare Multiplikation wird anhand von Fig. 4b erläutert. Es besteht die Aufgabe, die Binärzahlen "111" und "101" miteinander zu multiplizieren. Hierzu wird in einem Coprozessor diese Multiplikation analog einer Multiplikation zweier Zahlen gemäß der bekannten "Schulmathematik" ausgeführt, jedoch mit binärer Zahlendarstellung. Aufgrund der Einfachheit der Darstellung wird nachfolgend der Fall betrachtet, in dem kein Look-Ahead-Algorithmus und keine Modulo-Reduktion eingesetzt wird. Wenn dieser Algorithmus durchgeführt wird, so ergibt sich zunächst ein erstes Partialprodukt "111". Dieses Partialprodukt wird dann, um seine Signifikanz zu berücksichtigen, um eine Stelle nach links verschoben. Zu dem ersten nach links verschobenen Partialprodukt, das als Zwischenergebnis eines ersten Iterationsschritts aufgefaßt werden kann, wird dann, in einem zweiten Iterationsschritt das zweite Partialprodukt "000" hinzuaddiert. Das Ergebnis dieser Addition wird dann wieder um eine Stelle nach links verschoben. Das verschobene Ergebnis dieser Addition ist dann das aktualisierte Zwischenergebnis. Zu diesem aktualisierten Zwischenergebnis wird dann das letzte Partialprodukt "111" hinzuaddiert. Das erhaltene Ergebnis ist dann das Endergebnis der Multiplikation. Es ist zu sehen, daß die Multiplikation in zwei Additionen und zwei Verschiebungsoperationen aufgeteilt worden ist.

Es ist ferner zu sehen, daß der Multiplikand M das Partialprodukt darstellt, wenn die betrachtete Stelle des Multiplikators eine binäre "1" ist. Das Partialprodukt ist hingegen 0, wenn die betrachtete Stelle des Multiplikators eine binäre "0" ist. Ferner werden durch die jeweiligen Verschiebungsoperationen die Stellen bzw. die Wertigkeiten der Partialprodukte berücksichtigt. In Fig. 4b ist dies durch das versetzte Auftragen der Partialprodukte dargestellt. Hardwaremäßig werden für die Addition von Fig. 4b zwei Register Z₁ und Z₂ benötigt. Das erste Partialprodukt könnte in dem Register Z₁ gespeichert werden und dann in diesem Register um ein Bit nach links geschoben werden. Das zweite Partialprodukt könnte in dem Register Z₂ gespeichert werden. Die Zwischensumme könnte dann wieder im Register Z₁ gespeichert werden und dann wieder um ein Bit nach links geschoben werden. Das dritte Partialprodukt würde wieder im Register Z₂ gespeichert werden. Das Endergebnis würde dann im Register Z₁ stehen.

Ein schematisches Flussdiagramm für das in Fig. 4b gezeigte Verfahren findet sich in Fig. 4a. Zunächst werden in einem Schritt S10 die in einem Coprozessor vorhandenen Register initialisiert. In einem Schritt S12 wird anschließend, nach dem Initialisieren, eine Drei-Operanden-Addition durchgeführt, um das erste Partialprodukt zu berechnen. Es sei darauf hingewiesen, dass für das einfache in Fig. 4b gegebene Beispiel, das eine Multiplikation ohne Modulo-Operation darstellt, die in Fig. S12 bezeichnete Gleichung lediglich Z, a₁ und P₁ umfassen würde. a₁ kann als erster Look-Ahead-Parameter bezeichnet werden. In der allereinfachsten Ausführung hat a einen Wert von "1", wenn die betrachtete Stelle des Multiplikators 0 eine 1 ist. a ist gleich Null, wenn die betrachtete Stelle des Multiplikators eine Null ist.

Die in Block S12 dargestellte Operation wird parallel für alle beispielsweise 1024 Bit durchgeführt. Daraufhin wird in einem Schritt S14 im einfachsten Fall eine Verschiebungsoperation um eine Position nach rechts durchgeführt, um zu berücksichtigen, dass das höchstwertige Bit des 2. Partialprodukts eine Stelle niedriger angeordnet ist als das höchstwertige Bit des 1. Partialprodukts. Haben mehrere aufeinanderfolgende Bits des Multiplikators O eine Null, so findet eine Verschiebung um mehrere Positionen nach rechts statt. Schließlich wird in einem Schritt S16 wieder die parallele Drei-Operanden-Addition beispielsweise unter Verwendung der in Fig. 3 gezeigten Addiererkette, durchgeführt.

Dieses Verfahren wird fortgesetzt, bis alle beispielsweise 1024 Partialprodukte aufaddiert sind. Seriell/Parallel bedeutet also die parallele Durchführung in dem Block S12 oder S16, und das serielle Verarbeiten, um nacheinander alle Partialprodukte miteinander zu kombinieren.

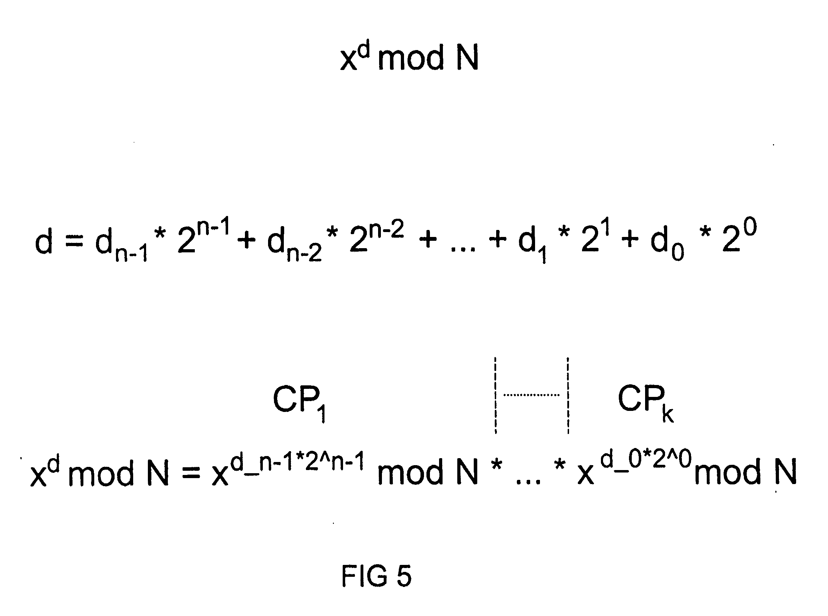

Im nachfolgenden wird auf die Fig. 5 bis 7 eingegangen, um einige Beispiele dafür zu geben, wie eine Operation in bestimmte Teiloperationen aufgeteilt werden kann. Betrachtet wird in Fig. 5 die Operation x^{d} mod N. Zur Zerlegung dieser modularen Exponentiation wird der Exponent d in binärer Schreibweise dargestellt. Wie es in Fig. 5 dargestellt ist, ergibt sich dadurch eine Kette von modularen Multiplikationen, wobei, wie es ebenfalls in Fig. 5 dargestellt ist, jede modulare Einzeloperation je einem Coprozessor zugeordnet werden kann, derart, dass sämtliche modularen Operationen parallel durch den in Fig. 1 gezeigten Kryptographieprozessor ausgeführt werden. Die dann erhaltenen Zwischenergebnisse werden, nachdem sie parallel ermittelt worden sind, aufmultipliziert, um das Ergebnis zu erhalten. Die CPU 102 steuert dabei die Aufteilung auf die einzelnen Coprozessoren CP₁ bis CPₖ und dann das abschließende Aufmultiplizieren der einzelnen Zwischenergebnisse.

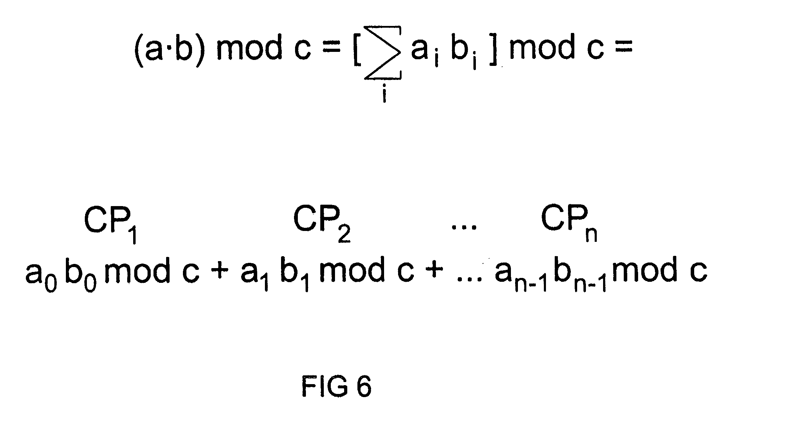

In Fig. 6 ist ein weiteres Beispiel für eine Aufteilung einer Operation (a*b) mod c in mehrere modulare Operationen gezeigt. Wieder kann der Coprozessor CP₁ ein erstes Zwischenergebnis ermitteln. Die Coprozessoren CP₂ bis CPₙ berechnen ebenfalls Zwischenergebnisse, woraufhin, nach Erhalten der Zwischenergebnisse, die CPU 102 die Aufmultiplikation der Zwischenergebnisse steuert. Die CPU steuert die Aufsummation z. B. so, daß sie einen Coprozessor auswählt, der dann die Zwischenergebnisse zur Aufsummation erhält. Auch hier wird also eine Operation in mehrere voneinander unabhängige Teiloperationen aufgeteilt.

Es sei darauf hingewiesen, dass viele Möglichkeiten bestehen, um die eine oder andere Operation in Teiloperationen aufzuteilen. Die in Fig. 5 und 6 gegebenen Beispiele dienen lediglich zur Veranschaulichung der Möglichkeiten zur Aufteilung einer Operation in eine Mehrzahl von Teiloperationen, wobei durchaus günstigere Aufteilungen hinsichtlich der erreichbaren Performance existieren können. Wesentlich an den Beispielen ist somit nicht die Performance des Prozessors, sondern daß Aufteilungen existieren, so dass jeder Coprozessor eine unabhängige Teiloperation durchführt, und dass eine Mehrzahl von Coprozessoren von einer zentralen Verarbeitungseinheit gesteuert wird, um ein möglichst verschleiertes Stromprofil am Stromeingang in den Chip zu erhalten.

### Bezugszeichenliste

- 100: Chip
- 101: Bus
- 102: CPU
- 104a: Coprozessor
- 104b: Coprozessor
- 104c: Coprozessor
- 106a: arithmetische Einheit AU 1
- 106b: Register 1
- 106c: Register 2
- 106d: Register 3
- 106e: Steuereinheit
- 108a: arithmetische Einheit AU 2
- 108b: Register 1
- 108c: Register 2
- 108d: Register 3
- 108e: Steuereinheit
- 114: Eingangsschnittstelle
- 116: Ausgangsschnittstelle
- 118: RAM
- 120: Taktgenerator
- 122: Stromversorgungsanschluss
- 200: Einrichtung zum Variieren der Reihenfolge
- 202: Einrichtung zum Steuern von Dummy-Berechnungen
- 800: Computerplatine
- 802: CPU
- 804: RAM
- 806: erster Coprozessor
- 808: zweiter Coprozessor
- 810: dritter Coprozessor
- 812: Bus
- 814: Speicher 1
- 816: Speicher 2
- 818: Speicher 3
- I₁ - I₈: Stromversorgungsanschlüsse

## Patentansprüche

1. Kryptographieprozessor zum Durchführen von Operationen für kryptographische Anwendungen, mit folgenden Merkmalen:
einer Mehrzahl von Coprozessoren (104a, 104b, 104c), wobei jeder Coprozessor eine Steuereinheit (106e, 108e), eine arithmetische Einheit (106a, 108a) und eine Mehrzahl von Registern (106b, 106c, 106d, 108b, 108c, 108d), die der arithmetischen Einheit (106a, 108a) des jeweiligen Coprozessors exklusiv zugewiesen sind, aufweist, und wobei jeder Coprozessor eine Wortlänge hat, die durch die Zahlenbreite der jeweiligen arithmetischen Einheit (106a, 108a) vorgegeben ist;
einer zentralen Verarbeitungseinrichtung (102) zum Ansteuern der Mehrzahl von Coprozessoren, wobei die zentrale Verarbeitungseinheit (102) angeordnet ist, um zumindest zwei Coprozessoren so zu koppeln, dass die denselben exklusiv zugewiesenen Register zusammengeschaltet sind, so daß die gekoppelten Coprozessoren eine Berechnung mit Zahlen durchführen können, deren Wortlänge gleich der Summe der Zahlenbreiten der arithmetischen Einheiten der gekoppelten Coprozessoren ist; und
einem Bus (101) zum Verbinden jedes Coprozessors mit der zentralen Verarbeitungseinheit,
wobei die zentrale Verarbeitungseinheit, die Mehrzahl von Coprozessoren und der Bus auf einem einzigen Chip (100) integriert sind, und
wobei der Chip einen gemeinsamen Versorgungsstromzugang (122) zum Versorgen der Mehrzahl von Coprozessoren aufweist.

2. Kryptographieprozessor nach Anspruch 1,
bei dem jeder Coprozessor (104a, 104b, 104c) der Mehrzahl von Coprozessoren für einen eigenen Typ von kryptographischen Algorithmen vorgesehen ist, so dass der Kryptographieprozessor für eine Mehrzahl von kryptographischen Algorithmen hardwaremäßig ausgestaltet ist.

3. Kryptographieprozessor nach Anspruch 1, bei dem die Mehrzahl von Coprozessoren einzelne Gruppen von parallel geschalteten Coprozessoren aufweist, wobei jede Gruppe von Coprozessoren für einen eigenen Typ von kryptographischen Algorithmen vorgesehen ist, so dass der Kryptographieprozessor für eine Mehrzahl von kryptographischen Algorithmen geeignet ist.

4. Kryptographieprozessor nach Anspruch 2 oder 3, bei dem der Typ von kryptographischen Algorithmen aus einer Gruppe ausgewählt ist, die folgende Mitglieder aufweist:
DES-Algorithmen, AES-Algorithmen für symmetrische Verschlüsselungsverfahren, RSA-Algorithmen für asymmetrische Verschlüsselungsverfahren und Hash-Algorithmen zur Berechnung von Hash-Werten.

5. Kryptographieprozessor nach einem der vorhergehenden Ansprüche,
bei dem eine kryptographische Operation in eine Mehrzahl von Teiloperationen zerlegbar ist, wobei die zentrale Verarbeitungseinrichtung angeordnet ist, um die Mehrzahl von Teiloperationen auf einzelne Coprozessoren (104a, 104b, 104c) der Mehrzahl von Coprozessoren zu verteilen.

6. Kryptographieprozessor nach einem der vorhergehenden Ansprüche,
bei dem sich die Coprozessoren voneinander unterscheiden, so dass die Anzahl der verschiedenen mathematischen Operationen, die der Kryptographieprozessor hardwaremäßig durchführen kann, zumindest gleich der Anzahl von Coprozessoren ist.

7. Kryptographieprozessor nach einem der vorhergehenden Patentansprüche, bei dem die Operationen für kryptographische Anwendungen eine modulare Exponentiation und/oder eine modulare Multiplikation und/oder eine modulare Addition/Subtraktion umfassen.

8. Kryptographieprozessor nach einem der vorhergehenden Ansprüche, bei dem jeder Coprozessor angeordnet ist, um binäre Zahlen mit zumindest 160 Stellen und bevorzugterweise zumindest 1024 oder 2048 Stellen zu verarbeiten.

9. Kryptographieprozessor nach einem der vorhergehenden Ansprüche, der ferner einen nur der zentralen Verarbeitungseinrichtung (102) zugeordneten Speicher (118) aufweist.

10. Kryptographieprozessor nach einem der vorhergehenden Ansprüche, der ferner folgendes Merkmal aufweist:
eine Takterzeugungseinrichtung (120) zum Liefern eines Taktes zu der Verarbeitungseinrichtung (102) und der Mehrzahl von Coprozessoren, wobei die Takterzeugungseinrichtung ebenfalls auf dem einzigen Chip integriert ist.

11. Kryptographieprozessor nach Anspruch 1,
bei dem sich die Länge (L₁, L₂) der Mehrzahl von Registern, die einem Coprozessor zugeordnet sind, und die Länge der Mehrzahl von Registern, die einem anderen Coprozessor zugeordnet sind, unterscheiden, derart, dass die Coprozessoren arithmetische Berechnung mit jeweils unterschiedlichen langen Zahlen durchführen können.

12. Kryptographieprozessor nach Anspruch 1 oder Anspruch 11, bei dem die Anzahl der Register, die einem Coprozessor zugeordnet ist, ausreichend ist, um Operanden für zumindest zwei Teiloperationen zu halten, so dass für zumindest zwei Teiloperationen keine Übertragung von Operanden zwischen den Coprozessoren (104a, 104b, 104c) und der zentralen Verarbeitungseinrichtung (102) erforderlich ist.

13. Kryptographieprozessor nach Anspruch 12, bei dem die zentrale Verarbeitungseinheit (102) ferner folgendes Merkmal aufweist:
eine Einrichtung (200) zum zeitlichen Steuern des Betriebs der Coprozessoren, derart, dass die Reihenfolge der zumindest zwei Teiloperationen, deren Operationen in den Registern eines Coprozessors gespeichert werden, einstellbar ist.

14. Kryptographieprozessor nach Anspruch 1, der ferner folgendes Merkmal aufweist:
eine Einrichtung zum Abschalten von einem Coprozessor, falls von der zentralen Verarbeitungseinrichtung bestimmt wird, dass für den einen Coprozessor keine Teiloperationen vorhanden sind, um den Stromverbrauch des Kryptographieprozessors zu verringern.

15. Kryptographieprozessor nach einem der vorhergehenden Ansprüche, bei dem die zentrale Verarbeitungseinrichtung (102) angeordnet ist, um zumindest zwei Coprozessoren zu einem Cluster zu verbinden, derart, dass eine Teiloperation dem Cluster zugewiesen wird, so dass eine Teiloperation durch die Coprozessoren des Clusters zusammen ausführbar ist.

16. Kryptographieprozessor nach einem der vorhergehenden Ansprüche, bei dem die arithmetische Einheit zumindest eines Coprozessors ein Seriell/Parallel-Rechenwerk aufweist, das so ausgestaltet ist, dass in einem Zyklus eine Anzahl von Rechnungen parallel ausführbar ist, wobei die Anzahl gleich den Stellen einer in der Rechnung verwendeten Zahl ist, und in einem anderen späteren Zyklus auf serielle Art und Weise unter Verwendung des Ergebnisses des einen Zyklus dieselbe Rechnung wie im ersten Zyklus durchgeführt wird.

17. Kryptographieprozessor nach Patentanspruch 16, bei dem ein Coprozessor für eine modulare Multiplikation ausgeführt ist, um in dem einen Zyklus ein Partialprodukt zu einem Ergebnis eines vorherigen Zyklus hinzu zu addieren, und in einem weiteren Zyklus das Ergebnis des letzten Zyklus zu einem nächsten Partialprodukt hinzu zu addieren.

18. Kryptographieprozessor nach Patentanspruch 17, bei dem die arithmetische Einheit einen Drei-Operanden-Addierer für eine modulare Multiplikation aufweist, welcher für jede Stelle einer verarbeiteten Zahl folgende Merkmale aufweist:
einen Halbaddierer für eine Addition ohne Übertrag mit drei Eingängen und zwei Ausgängen; und
einen nachgeschalteten Volladdierer mit zwei Eingängen und einem Ausgang.

19. Kryptographieprozessor nach einem der vorhergehenden Ansprüche,
bei dem die zentrale Verarbeitungseinheit (102) eine Einrichtung zum Ansteuern eines Kryptocoprozessors aufweist, um eine Dummy-Berechnung auszuführen.

20. Kryptographieprozessor nach Patentanspruch 16, bei dem die Einrichtung (202) zum Steuern von Dummy-Berechnungen angeordnet ist, um den Kryptographieprozessor, der eine Dummy-Berechnung ausführt, zufällig auszuwählen.

## Claims

1. A cryptographic processor for performing operations for cryptographic applications, comprising:
a plurality of coprocessors (104a, 104b, 104c), each coprocessor having a control unit (106e, 108e), an arithmetic unit (106a, 108a) and a plurality of registers (106b, 106c, 106d, 108b, 108c, 108d) exclusively associated with said arithmetic unit (106a, 108a) of the respective coprocessor, each coprocessor having a word length which is predetermined by the number width of the respective arithmetic unit (106a, 108a);
a central processing unit (102) for controlling said plurality of coprocessors, said central processing unit (102) being arranged to couple at least two coprocessors in such a way that the registers exclusively associated with them are interconnected so that the coupled coprocessors can perform a calculation with numbers the word length of which equals the sum of the number widths of said arithmetic units of said coupled coprocessors; and
a bus (101) for connecting each coprocessor to the central processing unit,
said central processing unit, said plurality of coprocessors and said bus being integrated on one single chip (100),and
said chip having a common power supply terminal (122) for feeding said plurality of coprocessors.

2. The cryptographic processor according to claim 1, wherein each coprocessor (104a, 104b, 104c) of said plurality of coprocessors is provided for a type of cryptographic algorithms of its own so that the cryptographic processor is implemented in terms of hardware for a plurality of cryptographic algorithms.

3. The cryptographic processor according to claicn 1, wherein said plurality of coprocessors comprises individual groups of coprocessors connected in parallel, each of said group of coprocessors being provided for a type of cryptographic algorithm of its own, so that the cryptographic processor is suitable for a plurality of cryptographic algorithms.

4. A cryptographic processor according to claim 2 or 3, wherein the type of cryptographic algorithms is selected from a group having the following members:
DES algorithms, AES algorithms for symmetric encryption processes, RSA algorithms for asymmetric encryption processes and Hash algorithms for computing Hash values.

5. The cryptographic processor according to one of the preceding claims,
wherein a cryptographic operation can be split into a plurality of partial operations, the central processing unit being arranged to distribute the plurality of partial operations to individual coprocessors (104a, 104b, 104c) of said plurality of coprocessors.

6. The cryptographic processor according to one of the preceding claims,
wherein the coprocessors are different from each other such that the number of different mathematical operations which the cryptographic processor is capable of carrying out in terms of hardware is at least equal to the number of coprocessors.

7. The cryptographic processor according to one of the preceding claims, wherein the operations for cryptographic applications comprise modular exponentiation and/or modular multiplication and/or modular addition/subtraction.

8. The cryptographic processor according to one of the preceding claims, wherein each coprocessor is arranged to process binary numbers having at least 160 positions and preferably at least 1024 or 2048 positions.

9. The cryptographic processor according to one of the preceding claims, further comprising one memory (118) only associated with the central processing unit (102).

10. The cryptographic processor according to one of the preceding claims, further comprising:
clock generating means (120) for delivering a clock to said processing unit (102) and said plurality of coprocessors, said clock generating means being integrated on said single chip as well.

11. The cryptographic processor according to claim 1,
wherein the length (L₁, L₂) of said plurality of registers associated with one coprocessor as well as the length of said plurality of registers associated with another coprocessor are different from each other such that the coprocessors are capable of carrying out arithmetic computations with numbers of different length each.

12. The cryptographic processor according to claims 1 or 11, wherein the number of registers associated with one coprocessor is sufficient to hold operands for at least two partial operations so that for at least two partial operations it is not necessary to transfer operands between the coprocessors (104a, 104b, 104c) and said central processing unit (102).

13. The cryptographic processor according to claim 12, wherein said central processing unit (102) further comprises:
means (200) for time control of the operation of the coprocessors such that the sequence of said at least two partial operations, whose operations are stored in the registers of one coprocessor, is adjustable.

14. The cryptographic processor according to claim 1, further comprising:
means for deactivating a coprocessor if the central processing unit determines that there are no partial operations present for said coprocessor, in order to reduce the power consumption of the cryptographic processor.

15. The cryptographic processor according to one of the preceding claims, wherein the central processing means (102) is arranged to connect at least two coprocessors to a cluster, such that a partial operation is assigned to the cluster so that a partial operation can be carried out by the coprocessors of the cluster jointly.

16. The cryptographic processor according to one of the preceding claims, wherein the arithmetic unit of at least one coprocessor has a serial/parallel arithmetic-logic unit which is designed such that a number of computations can be carried out in parallel in one cycle, said number being equal to the positions of a number used in the computation, and in another, subsequent cycle, the same computation as in the first cycle is carried out in serial manner using the result of said one cycle.

17. The cryptographic processor according to claim 16, wherein a coprocessor is designed for modular multiplication, in order to add, in one cycle, a partial product to a result of a previous cycle, and in order to add, in an additional cycle, the result of the last cycle to a next partial product.

18. The cryptographic processor according to claim 17, wherein the arithmetic unit comprises a three-operand adder for modular multiplication, which for each position of a number being processed comprises:
a half-adder for addition without amount carried over, having three inputs and two outputs; and
a subsequent full adder having two inputs and one output.

19. The cryptographic processor according to one of the preceding claims,
wherein the central processing unit (102) comprises means for controlling a crypto coprocessor for performing a dummy computation.

20. The cryptographic processor according to claim 16, wherein said means (202) for controlling dummy computations is arranged to randomly select the cryptographic processor performing a dummy computation.

## Revendications

1. Processeur cryptographique pour la mise en oeuvre d'opérations destinées à des applications cryptographiques, avec les caractéristiques suivantes :
une multiplicité de coprocesseurs (104a, 104b, 104c), chaque coprocesseur comportant une unité de commande (106e, 108e), une unité arithmétique (106a, 108a) et une multiplicité de registres (106b, 106c, 106d, 108b, 108c, 108d) qui sont attribués exclusivement à l'unité arithmétique (106a, 108a) du coprocesseur respectif et chaque coprocesseur ayant une longueur de mot qui est prédéterminée par la largeur de nombre de l'unité arithmétique respective (106a, 108a) ;
un dispositif de traitement central (102) pour commander la multiplicité de coprocesseurs, le dispositif de traitement central (102) étant disposé pour coupler au moins deux coprocesseurs de telle sorte que les registres attribués exclusivement au même sont interconnectés de telle sorte que les coprocesseurs peuvent effectuer un calcul avec des nombres dont la longueur de mot est égale à la somme des largeurs de nombre des unités arithmétiques des coprocesseurs couplés ; et
un bus (101) pour relier chaque coprocesseur à l'unité de traitement centrale,
l'unité de traitement centrale, la multiplicité de coprocesseurs et le bus étant intégrés sur une seule puce (100), et
la puce comportant un accès de courant d'alimentation (122) commun pour alimenter la multiplicité de coprocesseurs.

2. Processeur cryptographique selon la revendication 1, dans lequel chaque coprocesseur (104a, 104b, 104c) de la multiplicité de coprocesseurs est prévu pour un type particulier d'algorithmes cryptographiques, de telle sorte que le processeur cryptographique est conçu du point de vue matériel pour une multiplicité d'algorithmes cryptographiques.

3. Processeur cryptographique selon la revendication 1, dans lequel la multiplicité de coprocesseurs comporte des groupes individuels de coprocesseurs branchés en parallèle, chaque groupe de coprocesseurs étant prévu pour un type particulier d'algorithmes cryptographiques, de telle sorte que le processeur cryptographique convient à une multiplicité d'algorithmes cryptographiques.

4. Processeur cryptographique selon la revendication 2 ou 3, dans lequel le type d'algorithmes cryptographiques est sélectionné parmi un groupe qui contient les membres suivants :
algorithmes DES, algorithmes AES pour procédés de chiffrement symétriques, algorithmes RSA pour procédés de chiffrement asymétriques et algorithmes de hachage pour calcul de valeurs de hachage.

5. Processeur cryptographique selon l'une des revendications précédentes, dans lequel une opération cryptographique peut être décomposée en une multiplicité de sous-opérations, le dispositif de traitement central étant disposé pour répartir la multiplicité de sous-opérations sur des coprocesseurs individuels (104a, 104b, 104c) de la multiplicité de coprocesseurs.

6. Processeur cryptographique selon l'une des revendications précédentes, dans lequel les coprocesseurs se distinguent les uns des autres de telle sorte que le nombre des différentes opérations mathématiques que peut effectuer le processeur cryptographique du point de vue matériel est au moins égal au nombre de coprocesseurs.

7. Processeur cryptographique selon l'une des revendications précédentes, dans lequel les opérations pour des applications cryptographiques comprennent une fonction exponentielle modulaire et/ou une multiplication modulaire et/ou une addition/soustraction modulaire.

8. Processeur cryptographique selon l'une des revendications précédentes, dans lequel chaque coprocesseur est disposé pour traiter des nombres binaires comportant au moins 160 positions et de préférence au moins 1024 ou 2048 positions.

9. Processeur cryptographique selon l'une des revendications précédentes, qui comporte en plus une mémoire (118) associée seulement au dispositif de traitement central (102).

10. Processeur cryptographique selon l'une des revendications précédentes, qui comporte en plus la caractéristique suivante :
un dispositif de production d'horloge (120) pour fournir une horloge au dispositif de traitement (102) et à la multiplicité de coprocesseurs, le dispositif de production d'horloge étant également intégré sur la puce unique.

11. Processeur cryptographique selon la revendication 1, dans lequel la longueur (L₁, L₂) de la multiplicité de registres qui sont associés à un coprocesseur et la longueur de la multiplicité de registres qui sont associés à un autre coprocesseur se distinguent de telle sorte que les coprocesseurs peuvent effectuer un calcul arithmétique avec des nombres à chaque fois de longueur différente.

12. Processeur cryptographique selon la revendication 1 ou la revendication 11, dans lequel le nombre des registres qui sont associés à un coprocesseur est suffisant pour contenir des opérandes pour au moins deux sous-opérations de telle sorte que, pour au moins deux sous-opérations, aucune transmission d'opérandes entre les coprocesseurs (104a, 104b, 104c) et le dispositif de traitement central (102) n'est nécessaire.

13. Processeur cryptographique selon la revendication 12, dans lequel l'unité de traitement centrale (102) comporte en plus la caractéristique suivante :
un dispositif (200) pour la commande temporelle du fonctionnement des coprocesseurs de manière à pouvoir régler l'ordre des au moins deux sous-opérations dont les opérandes sont mémorisées dans les registres d'un coprocesseur.

14. Processeur cryptographique selon la revendication 1, qui comporte en plus la caractéristique suivante :
un dispositif pour la coupure d'un coprocesseur si le dispositif de traitement central constate qu'il n'existe aucune sous-opération pour ce coprocesseur afin de réduire la consommation de courant du processeur cryptographique.

15. Processeur cryptographique selon l'une des revendications précédentes, dans lequel le dispositif de traitement central (102) est disposé pour relier au moins deux coprocesseurs en un cluster de telle sorte qu'une sous-opération est attribuée au cluster de telle sorte qu'une sous-opération peut être effectuée conjointement par les coprocesseurs du cluster.

16. Processeur cryptographique selon l'une des revendications précédentes, dans lequel l'unité arithmétique d'au moins un coprocesseur comporte une unité de calcul série parallèle qui est conçue de telle sorte qu'un certain nombre de calculs peuvent être exécutés en parallèle dans un cycle, ce nombre étant égal aux positions d'un nombre utilisé dans le calcul, et que le même calcul que dans le premier cycle est effectué dans un autre cycle ultérieur en série en utilisant le résultat du premier cycle mentionné.

17. Processeur cryptographique selon la revendication 16, dans lequel un coprocesseur est réalisé pour une multiplication modulaire pour ajouter dans le premier cycle mentionné un produit partiel à un résultat d'un cycle précédent et pour ajouter dans un autre cycle le résultat du dernier cycle à un prochain produit partiel.

18. Processeur cryptographique selon la revendication 17, dans lequel l'unité arithmétique comporte un additionneur à trois opérandes pour une multiplication modulaire, lequel additionneur comporte pour chaque position d'un nombre traité la caractéristique suivante :
un demi-additionneur pour une addition sans retenue avec trois entrées et deux sorties ; et
un additionneur complet branché du côté aval avec deux entrées et une sortie.

19. Processeur cryptographique selon l'une des revendications précédentes, dans lequel l'unité de traitement centrale (102) comporte un dispositif pour commander un coprocesseur cryptographique pour effectuer un calcul factice ou dit Dummy.

20. Processeur cryptographique selon la revendication 16, dans lequel le dispositif (202) pour commander des calculs factices ou dits Dummy est disposé pour sélectionner de façon aléatoire le processeur cryptographique qui exécute un calcul factice ou dit Dummy.
